# EUROPÄISCHE PATENTANMELDUNG

(11) **EP 3 035 501 A1**
(43) Veröffentlichungstag der Anmeldung: **22.06.2016**
(21) Anmeldenummer: 14198843.6
(22) Anmeldetag: 18.12.2014
(51) Int. Cl.: H02K 3/12, H02K 15/04

(54) **Stator für eine elektrische Maschine**

(71) Anmelder: Siemens Aktiengesellschaft, 80333 München (DE)
(72) Erfinder: Centner, Matthias, 10555 Berlin (DE); Festa, Marco, 14612 Falkensee (DE); Kaufhold, Elias, 10318 Berlin (DE); Sabelfeld, Ilja, 10119 Berlin (DE)

(57) **Zusammenfassung**

Die Erfindung betrifft einen Stator für eine elektrische Maschine, wobei der Stator mit einer elektrischen Leistung von zumindest 1 MW betreibbar ist, wobei der Stator ein hohlzylinderförmiges Statorjoch (1) und zumindest eine offene Nut (2) aufweist, welche jeweils an der radialen Innenseite (3) des Statorjoches (1) angeordnet ist und welche jeweils in axialer Richtung verläuft. Weiterhin betrifft die Erfindung eine elektrische Maschine aufweisend einen derartigen Stator. Schließlich betrifft die Erfindung eine Mühle oder einen Kompressor aufweisend eine derartige elektrische Maschine. Um einen derartigen Stator bzw. eine derartige elektrische Maschine derart weiterzubilden, dass die zuvor beschriebenen Nachteile des Standes der Technik überwunden werden, wird zumindest eine Toroidspule (4) vorgeschlagen, welche jeweils das Statorjoch (1) umschließt, wobei die zumindest eine Toroidspule (4) jeweils einen Nutabschnitt (5) aufweist, welcher in der jeweiligen Nut (2) angeordnet ist, wobei die zumindest eine Toroidspule (4) jeweils einen Rückenabschnitt (6) aufweist, welcher an der radialen Außenseite (7) des Statorjoches (1) angeordnet ist, und wobei die zumindest eine Toroidspule (4) je axialer Stirnseite (8) einen Radialabschnitt (9) aufweist, welcher den jeweiligen Nutabschnitt (5) mit dem jeweiligen Rückenabschnitt (6) verbindet. Weiterhin werden eine elektrische Maschine aufweisend einen derartigen Stator sowie eine Mühle oder ein Kompressor aufweisend eine derartige elektrische Maschine vorgeschlagen.

## Beschreibung

Die Erfindung betrifft einen Stator für eine elektrische Maschine, wobei der Stator mit einer elektrischen Leistung von zumindest 1 MW betreibbar ist, wobei der Stator ein hohlzylinderförmiges Statorjoch und zumindest eine offene Nut aufweist, welche jeweils an der radialen Innenseite des Statorjoches angeordnet ist und welche jeweils in axialer Richtung verläuft. Weiterhin betrifft die Erfindung eine elektrische Maschine aufweisend einen derartigen Stator. Schließlich betrifft die Erfindung eine Mühle oder einen Kompressor aufweisend eine derartige elektrische Maschine.

Bei schnell drehenden elektrischen Maschinen, insbesondere bei zweipoligen Maschinen, haben die Wickelköpfe eine große axiale Ausdehnung. Typischerweise ist die Gesamtlänge beider Wickelköpfe ähnlich groß wie die aktive Länge, so dass nur etwa die Hälfte der theoretisch nutzbaren Länge zwischen den Lagerstellen magnetisch aktiv ist.

Versuche, die Lager in den Wickelkopfbereich einzuschieben, sind bisher wenig erfolgreich gewesen. Insbesondere der Durchmesser aktiver Magnetlager für elektrische Maschinen großer Leistung ist zu groß, als dass die Lager innerhalb der Wickelköpfe untergebracht werden könnten. Zwar könnte man die Wickelköpfe theoretisch stärker radial nach außen kröpfen, so dass der Wickelkopfdurchmesser im Bereich der Lager vergrößert wird, jedoch sind die Platzverhältnisse aus elektrischen und geometrischen Gründen ohnehin kritisch. Im Fall einer Formspulenwicklung ließe sich eine Spule mit stärker gekröpftem Wickelkopfbereich noch schwieriger oder gar nicht durch die Ständerbohrung fädeln.

Durch eine Teilung des Ständerblechpakets könnte man stärker gekröpfte Spulen theoretisch leichter einlegen, denn ein Einfädeln wäre nicht mehr nötig, jedoch ist es aufgrund der üblichen und aus geometrischen Gründen notwendigen Sehnung nicht möglich, eine in sich geschlossene Ständerhälfte zu fertigen.

Bei einer Stabwicklung können auch stärker abgekröpfte Stäbe durch die Ständerbohrung gefädelt werden. Die Forderungen bzgl. Mindestabstände im Wickelkopf lassen trotzdem keine deutlich stärkeren Abkröpfungen zu. Außerdem hängt die Ausführbarkeit eines Ständers mit Stabwicklung von dem magnetischen Fluss, also der Maschinengröße, und der Klemmenspannung ab. In einigen Fällen müssten dann besondere Ausführungen von Stabwicklungen zur Anwendung kommen, die dann aber teurer sind und deutlich mehr Verbindungsstellen aufweisen.

Gelänge es, die Lager weiter unter den Wickelköpfen anzuordnen, könnte diese Reserve entweder zur Verringerung des Lagerabstands und folglich zu rotordynamisch verbesserten Auslegungen führen, oder die Bemessungsleistung könnte bei gleich bleibendem Lagerabstand erhöht werden. Noch bessere Ergebnisse könnte man erzielen, wenn man die Wickelköpfe axial deutlich verkürzen könnte. Während bei Vollpolsynchronmaschinen, wie z. B. bei Turboläufern, dann die axiale Länge der Läuferkappe zum begrenzenden Element wird, ist bei Asynchronmaschinen wegen der vergleichsweise schmalen Kurzschlussringe deutlich mehr Potenzial zur besseren Ausnutzung der Gesamtlänge zwischen den Lagerstellen zu erkennen.

Bei Maschinen hoher Drehzahl wird des Öfteren in Kauf genommen, dass die Rotordrehzahl oberhalb der ersten biegeschwingungskritischen Drehzahl liegt. Das führt zu Einschränkungen im Drehzahlbereich. Außerdem ist das erreichbare Drehmoment bei gegebenem Lagerabstand festgelegt. Der Trend geht zu höheren Leistungen bei hohen Drehzahlen, so dass alternative Lösungen notwendig sind.

Bei großen, hochpoligen Maschinen, wie sie z.B. als Antriebe in Erzmühlen verwendet werden, verlassen die Statoren nicht komplett zusammengesetzt das Werk, sondern werden in Segmenten mit dem Querschnitt eines Kreisringsegmentes ausgeliefert und am Einsatzort zu einem Ständer komplettiert. Bei gesehnter Zweischichtwicklung müssen naturgemäß einige Spulen am Einsatzort des Motors in das Ständerblechpaket eingelegt werden, weil Hin- und Rückleiter nicht in demselben Segment liegen. Das Komplettieren der Ständerwicklung am Einsatzort des Motors stellt einen großen Aufwand dar.

Ein Ringmotor, welcher für einen Mühlenantrieb eingesetzt werden kann, ist beispielsweise aus der DE 10 2007 005 131 B3 bekannt.

Gelänge es, das Problem zu lösen, könnten komplette Segmente geliefert werden, die am Einsatzort des Antriebs lediglich mechanisch zusammengesetzt und elektrisch verbunden werden müssten.

Bei hochpoligen Maschinen in Segmentbauweise gibt es Ausführungen mit einer zwangsläufig ungesehnten Einschichtwicklung, wobei sich die Wickelkopfbereiche der einzelnen Spulen voneinander unterscheiden. So wird eine Kreuzung zweier, in dem Fall sogar mindestens dreier, Spulen innerhalb des Wickelkopfes ermöglicht. Der Fertigungsaufwand ist aufgrund der unterschiedlichen Spulenformen umso größer, je größer die Anzahl der Nuten je Pol und Strang ist. Allerdings beträgt die Gesamtanzahl der Spulen nur die Hälfte der Spulenanzahl bei Zweischichtwicklung.

Ausgehend von den zuvor erläuterten Statoren und elektrischen Maschinen ist es eine Aufgabe der Erfindung, einen Stator bzw. eine elektrische Maschine der eingangs genannten Art derart weiterzubilden, dass die zuvor beschriebenen Nachteile des Standes der Technik überwunden werden.

Eine Lösung der Aufgabe ergibt sich für einen Stator der eingangs genannten Art durch zumindest eine Toroidwicklung, welche jeweils das Statorjoch umschließt, wobei die zumindest eine Toroidspule jeweils einen Nutabschnitt aufweist, welcher in der jeweiligen Nut angeordnet ist, wobei die zumindest eine Toroidspule jeweils einen Rückenabschnitt aufweist, welcher an der radialen Außenseite des Statorjoches angeordnet ist, und wobei die zumindest eine Toroidspule je axialer Stirnseite einen Radialabschnitt aufweist, welcher den jeweiligen Nutabschnitt mit dem jeweiligen Rückenabschnitt verbindet.

Weiterhin ergibt sich eine Lösung der Aufgabe durch eine elektrische Maschine aufweisend einen derartigen Stator. Schließlich ergibt sich eine Lösung der Aufgabe durch eine Mühle oder einen Kompressor aufweisend eine derartige elektrische Maschine.

Der vorgeschlagene Stator ist insbesondere für elektrische Großmaschinen geeignet, da er mit einer elektrischen Leistung von zumindest 1 MW betreibbar ist. Beispielsweise kann der Stator einen Innendurchmesser von zumindest 500 mm oder zumindest 1000 mm aufweisen. Die vorgeschlagene elektrische Maschine weist beispielsweise einen im Stator drehbar gelagerten Rotor auf, ist vorzugsweise eine rotatorische Maschine und kann beispielsweise als Windkraftgenerator oder Antriebsmotor, insbesondere Ringmotor, ausgestaltet sein. Insbesondere bei einem Einsatz des Stators bei einer Mühle oder einem Kompressor kann der Statorinnendurchmesser jedoch auch 3 m oder 5 m überschreiten, wobei der Stator dann beispielsweise mit einer elektrischen Leistung von mindestens 10 MW, teils mindestens 25 MW, betreibbar ist. Der vorgeschlagene Kompressor kann beispielsweise als Kolbenkompressor oder als Turbokompressor ausgestaltet sein. Beispielsweise kann ein entsprechender Ringmotor einen Statorinnendurchmesser von etwa 15 m aufweisen.

Das Statorjoch kann beispielsweise aus Ringsegmenten eines Hohlzylinders zusammengesetzt werden, wobei auch denkbar ist, dass das Statorjoch einteilig ausgeführt ist. In das Statorjoch ist zumindest eine, nach radial innen offene Nut vorgesehen, welche im Wesentlichen in axialer Richtung verläuft. Der vorgeschlagene Stator weist zumindest eine Toroidspule auf, welche jeweils einen Nutabschnitt, einen Rückenabschnitt und zwei Radialabschnitte aufweist, wobei je axialer Stirnseite ein Radialabschnitt vorgesehen ist. Die jeweilige, derart ausgestaltete Toroidspule umschließt dabei das Statorjoch. Beispielsweise kann man sich dies als zwei, ineinander verschränkte oder verschlungene Ringe vorstellen, wobei einer der Ringe das Statorjoch ist und der andere der Ringe die zumindest eine Toroidspule ist. Somit umschließt die jeweilige Toroidspule das hohlzylinderförmige Statorjoch in einer Ebene, welche von der axialen Richtung und einer radialen Richtung aufgespannt wird.

Dem vorgeschlagenen Stator liegen dabei insbesondere folgende Überlegungen zu Grunde.

Der Wickelkopf trägt nicht zur Drehmomentbildung bei. Er ist aber notwendig, um die Hinleiter mit den Rückleitern elektrisch zu verbinden. Liegt der Hinleiter unter einem magnetischen Nordpol, muss der Rückleiter bei einer konventionellen Wicklung etwa unter einem magnetischen Südpol liegen. Anderenfalls würden sich die Ströme aufheben, und das Gesamtdrehmoment wäre - zumindest theoretisch - Null.

Es ist möglich, ganz auf die drehmomentbildende Wirkung des Rückleiters zu verzichten. Der inaktive Rückleiter muss dann in einem Bereich des Maschinenquerschnitts auf die andere Maschinenseite zurückgeführt werden, wo er keine Drehmomentbildung zur Folge haben kann. Diese Forderung ist außerhalb des Ständerjochs erfüllt, wenn der Ständer außen liegt und den Läufer umschließt.

Dies wird insbesondere durch eine Anordnung von einer Spule bzw. mehreren Spulen erreicht, die toroidal um das Ständerjoch herum angeordnet ist bzw. sind. Diese grundsätzliche Wicklungsanordnung ist unter dem Begriff Toroidwicklung (englisch: "toroidal windings") bzw. Toroidspule bekannt. Sie wurde bei Kleinmaschinen untersucht, die entweder als Radialfluss- oder als Axialflussmaschinen ausgeführt sind und elektrische Leistungen erbringen können, welche um Größenordnungen kleiner als der vorgeschlagene Stator bzw. die vorgeschlagene elektrische Maschine sind. Gewöhnlich wird das Ständerjoch bei den genannten Kleinmaschinen direkt bewickelt, wie es auch bei Ringkerntransformatoren üblich ist.

Derartige Kleinmaschinen sind beispielsweise aus den folgenden Druckschriften bekannt: WO 99/019962 A1, US 4 563 606 A, EP 2 017 945 A1, US 4 103 197 A, EP 1 324 472 A2, WO 02/089291 A2, wobei dort teilweise auch ein Verguss des Stators beispielsweise mit Epoxidharz vorgesehen ist.

Aus den Dokumenten zum bisherigen Stand der Technik ist die Herstellung und Verwendung von Toroidspulen bei Großmaschinen, also insbesondere bei Statoren bzw. elektrischen Maschinen mit einer elektrischen Leistung von zumindest 1 MW, nicht bekannt.

Vorteilhaft gegenüber klassischen, bei Großmaschinen bisher verwendeten Spulen ist die einfache Gestalt der Toroidspulen. Sie werden beispielsweise um vier im Rechteck angeordnete Dorne gewickelt.

Insbesondere wenn der Läufer nicht durch die Ständerbohrung eingeführt werden soll oder kann, ist die Verwendung von Toroidspulen vorteilhaft, da dies für gewöhnlich eine Teilung des Jochs in mindestens zwei Segmente erfordert. Dies rührt daher, dass sich Toroidspulen für gewöhnlich nicht in ein geschlossenes Ständerjoch einlegen lassen. Bei den beschriebenen hochpoligen Ständern ist das ohnehin der Fall. Bei schnell drehenden Maschinen müssen zwei Ständerhälften gefertigt und dann zusammengefügt werden. Insbesondere bei den oben erwähnten Turbokompressoren kann dies von Vorteil sein, wenn das Kompressorengehäuse eine horizontale Teilfuge aufweist. Denn dadurch können die eigentliche Kompressoreinheit und der Antriebsmotor in der gleichen Technologie zusammengesetzt werden. Insbesondere könnte man den Ständer ebenfalls in eine obere und eine untere Hälfte teilen.

Eine weitere Möglichkeit besteht darin, jeweils zwei, größtenteils unabhängig voneinander isolierte Toroidspulen nebeneinander in eine Nut einzulegen und dann diese beiden Toroidspulen getrennt voneinander an das Ständerjoch anzulegen.

Obwohl die vorgeschlagene Toroidspule einige Vorteile bewirkt, treten auch einige Nachteile zu Tage. Beispielsweise ist zwar bei herkömmlichen, zweipoligen Maschinen bereits die inaktive Leiterlänge im Wickelkopf größer als die aktive Leiterlänge, so dass das Verhältnis der aktiven Leiterlänge zur gesamten Leiterlänge etwa 1,0 : 2,2 beträgt. Allerdings nimmt der magnetisch inaktive Leiteranteil bei Toroidspulen weiter zu. Das Verhältnis der aktiven Leiterlänge zur gesamten Leiterlänge liegt nunmehr etwa bei 1,0 : 2,5 bis 1,0 : 3,0. Daraus resultiert eine Erhöhung der Stromwärmeverluste. Eine Umsetzung bei einem speziellen Projekt hängt also maßgeblich von der Gewichtung der Forderungen und dem tatsächlichen Anteil der Stromwärmeverluste an den Gesamtverlusten ab.

Ein weiterer Nachteil ist die Vergrößerung des Ständeraußendurchmessers, die daher rührt, dass der Rückleiter an der radialen Außenseite des Statorjoches entlang geführt wird. Vorzugsweise wird bei der Konstruktion des Bereichs um den Ständer berücksichtigt, dass möglichst keine hochpermeablen, geschlossenen Wege geschaffen werden. Dadurch würde sich ein Streufluss ausbilden, der wiederum zur Erwärmung der konstruktiven Bauteile und einer Erhöhung der lastabhängigen Zusatzverluste führen würde. Weitere Verluste können bei Einschichtwicklungen durch einen größeren Feldoberwellenanteil entstehen.

Bei einer vorteilhaften Ausgestaltung der Erfindung ist die zumindest eine Toroidspule jeweils als Formspule ausgestaltet.

Formspulen werden oftmals bei Statorwicklungen von elektrischen Maschinen eingesetzt, welche mit Hochspannung, wie zum Beispiel 6 kV oder 8 kV, oder mit besonders großen elektrischen Leistungen, wie zum Beispiel 10 MW und mehr, betrieben werden. Dies rührt unter anderem auch daher, dass Formspulen eine sehr gute mechanische Stabilität aufweisen und besonders dazu geeignet sind, derart gegeneinander oder gegen das Statorjoch elektrisch isoliert zu werden. Hierzu können beispielsweise Außenglimmschutzbänder und dergleichen eingesetzt werden.

Vorzugsweise besitzt die jeweilige, als Formspule ausgestaltete Toroidspule eine ausreichende Weite, um in einem ersten Schritt auf das Ständerjochsegment gefädelt werden zu können. In einem zweiten Schritt wird die jeweilige Toroidspule radial nach außen bewegt, wobei der Hinleiter bzw. der jeweilige Nutabschnitt in die Nut gleitet und der Abstand zwischen dem Rückleiter bzw. Rückenabschnitt und dem Ständerjoch größer wird.

Bei einer alternativen, vorteilhaften Ausgestaltung der Erfindung ist bzw. sind der jeweilige Nutabschnitt und/oder der jeweilige Rückenabschnitt als Stabwicklung ausgestaltet.

Durch die Ausgestaltung des jeweiligen Nutabschnittes und/oder des jeweiligen Rückenabschnittes als Stabwicklung wird ermöglicht, den oder die Hin- und Rückleiter insbesondere in ein nicht-segmentiertes Ständerjoch einzuführen und danach elektrisch und mechanisch miteinander zu verbinden.

Bei einer weiteren vorteilhaften Ausgestaltung der Erfindung ist der jeweilige Nutabschnitt oder der jeweilige Rückenabschnitt zusammen mit den beiden jeweiligen Radialabschnitten dabei als Stabwicklung ausgestaltet, wobei die jeweilige Stabwicklung im Bereich des jeweiligen Radialabschnittes S-förmig ausgestaltet ist.

Beispielsweise kann somit eine jeweilige Toroidspule derart erhalten werden, dass der jeweilige Nutabschnitt als im Wesentlichen gerade ausgeführte Stabwicklung ausgestaltet ist, wobei der jeweilige Rückenabschnitt zusammen mit den beiden jeweiligen Radialabschnitten als doppel-S-förmige Stabwicklung ausgestaltet ist. Die jeweiligen Stabwicklungen können leicht vorab hergestellt werden und am Statorjoch angeordnet bzw. angebracht werden. Die am Statorjoch angeordneten bzw. angebrachten Stabwicklungen werden schließlich passend elektrisch miteinander verbunden, insbesondere mittels eines jeweiligen Verbindungselementes.

Eine derartige Ausgestaltung der jeweiligen Toroidspule ist vorteilhaft bei beengten Platzverhältnissen. Dies rührt daher, dass die jeweiligen Stabwicklungen derart ausgestaltet werden können, dass sie im Wesentlichen unmittelbar am Statorjoch anliegen und somit wenig Bauraum erfordern. Gleichzeitig sind derartige Stabwicklungen vergleichsweise ressourcenschonend und verlustarm, da sonst oftmals erforderliche Abkröpfungen am Wickelkopf eingespart werden können.

Bei einer weiteren vorteilhaften Ausgestaltung der Erfindung ist die jeweilige Stabwicklung dabei als Roebelstab ausgestaltet.

Die Ausgestaltung der jeweiligen Stabwicklung als Roebelstab ermöglicht, die während des Betriebs der entsprechenden elektrischen Maschine entstehenden Verluste zu reduzieren. Sind sowohl der Nutabschnitt als auch der Rückenabschnitt einer jeweiligen Toroidspule als Stabwicklung ausgestaltet, kann vorgesehen sein, lediglich eine der beiden Stabwicklungen als Roebelstab auszugestalten, um Kosten zu sparen. Die andere der beiden Stabwicklungen kann ohne Teilleiterverdrillung ausgeführt sein.

Bei einer weiteren vorteilhaften Ausgestaltung der Erfindung weist die zumindest eine Toroidspule jeweils einen außen angeordneten Wicklungsanfang und ein innen angeordnetes Wicklungsende auf, wobei der jeweilige Wicklungsanfang am jeweiligen Nutabschnitt, am jeweiligen Rückenabschnitt oder an einem der jeweiligen Radialabschnitte angeordnet ist, und wobei das jeweilige Wicklungsende am jeweiligen Nutabschnitt, am jeweiligen Rückenabschnitt oder an einem der jeweiligen Radialabschnitte angeordnet ist.

Der Wicklungsanfang bzw. das Wicklungsende soll dabei jenes Ende der Wicklung der jeweiligen Toroidspule sein, welches bezüglich der jeweiligen Toroidspule weiter außen bzw. weiter innen als das gegenüberliegende Ende angeordnet ist.

Vorteilhaft gegenüber klassischen Spulen ist die vergleichsweise einfache Gestalt der Toroidwicklung. Beispielsweise werden sie um im Viereck angeordnete Dorne gewickelt, wie zum Beispiel bei den oben erläuterten Formspulen. Dies ermöglicht eine äußerst flexible Ausgestaltung der Zuleitung bzw. Ableitung des elektrischen Stroms zur jeweiligen Toroidspule anhand des jeweiligen Wicklungsanfangs bzw. Wicklungsendes. Auch wenn die jeweilige Toroidspule als Stabwicklung ausgestaltet ist, ist diese Flexibilität gegeben.

Beispielsweise können der jeweilige Wicklungsanfang an einem der jeweiligen Radialabschnitte und das jeweilige Wicklungsende am jeweiligen Rückenabschnitt angeordnet sein. Denkbar ist auch, dass der jeweilige Wicklungsanfang an einem jeweiligen Nutabschnitt und das jeweilige Wicklungsende an einem jeweiligen Rückenabschnitt angeordnet sind. Alternativ können auch sowohl der jeweilige Wicklungsanfang als auch das jeweilige Wicklungsende am jeweiligen Rückenabschnitt angeordnet sein, wobei der jeweilige Wicklungsanfang und das jeweilige Wicklungsende jeweils beispielsweise in der Gegend der axialen Mitte oder am jeweiligen axialen Ende angeordnet sind. Weitere Kombinationen der Anordnung des jeweiligen Wicklungsanfangs und des jeweiligen Wicklungsendes sind denkbar und können entsprechend den jeweiligen Erfordernissen ausgewählt werden.

Bei einer weiteren vorteilhaften Ausgestaltung der Erfindung ist der jeweilige Radialabschnitt derart V-förmig in axialer Richtung ausgestaltet, dass der jeweilige Nutabschnitt in radialer Richtung vollständig in der jeweiligen Nut angeordnet ist und der jeweilige Rückenabschnitt auf der radialen Außenseite des Statorjoches aufliegt.

Beispielsweise kann die V-förmige Ausgestaltung des jeweiligen Radialabschnitts dadurch erreicht werden, dass die jeweilige Toroidspule im Bereich der axialen Mitte des jeweiligen Radialabschnitts in axialer Richtung gezogen wird. Die zum Verformen bzw. Ziehen aufgebrachte Kraft weist dabei in axialer Richtung und vom Statorjoch weg. Insbesondere wird somit eine jeweilige Toroidspule mit einem rechteckigen Querschnitt derart verformt, dass sie nach dem Ziehen den Querschnitt eines lang gezogenen Sechsecks aufweist. Denkbar ist auch, dass das entstehende V des jeweiligen Radialabschnitts eher U-förmig ausgestaltet ist und somit eine Art Boden zwischen den beiden Stegen aufweist, so dass die jeweilige Toroidspule derart verformt wird, dass sie nach dem Ziehen den Querschnitt eines lang gezogenen Achtecks aufweist.

Durch eine derartige Ausgestaltung der jeweiligen Toroidspule wird insbesondere der jeweilige Rückleiter möglichst nah an das Statorjoch herangezogen, wobei gleichzeitig der jeweilige Hinleiter optimal in der Nut liegt. Somit liegen der jeweilige Nutabschnitt vollständig in der jeweiligen Nut, wobei gleichzeitig der jeweilige Rückenabschnitt auf der radialen Außenseite des Statorjoches aufliegt. Insgesamt wird somit eine kompakte und Platz sparende Ausgestaltung der elektrischen Wicklung des Statorjoches erreicht.

Bei einer weiteren vorteilhaften Ausgestaltung der Erfindung ist der jeweilige Radialabschnitt derart V-förmig oder Z-förmig in Umfangsrichtung ausgestaltet, dass der jeweilige Nutabschnitt in radialer Richtung vollständig in der jeweiligen Nut angeordnet ist und der jeweilige Rückenabschnitt auf der radialen Außenseite des Statorjoches aufliegt.

Die V-förmige Ausgestaltung des jeweiligen Radialabschnitts wird insbesondere dadurch erreicht, dass die jeweilige Toroidspule im Bereich der axialen Mitte des jeweiligen Radialabschnitts in Umfangsrichtung gezogen wird. Insbesondere wird somit eine jeweilige Toroidspule mit einem rechteckigen Querschnitt derart verformt, dass sie nach dem Ziehen bei einer Draufsicht den Querschnitt eines Rechteckes aufweist, wobei das Rechteck entlang seiner langen Seite in der Mitte geknickt ausgeführt ist. Denkbar ist auch, dass das entstehende V des jeweiligen Radialabschnitts eher U-förmig ausgestaltet ist und somit eine Art Boden zwischen den beiden Stegen aufweist.

Alternativ kann auch eine Z-förmige Ausgestaltung des jeweiligen Radialabschnittes vorgesehen sein. Diese kann insbesondere dadurch erreicht werden, dass der jeweilige Radialabschnitt in drei Drittel unterteilt wird und das erste und letzte Drittel jeweils fixiert werden und anschließend gegeneinander in Umfangsrichtung verdreht und der jeweilige Radialabschnitt somit verformt werden. Derart erhält man einen jeweiligen Radialabschnitt, dessen erstes und letztes Drittel in radialer Richtung weisen und dessen zweites Drittel die beiden anderen, zueinander in Umfangsrichtung verdrehten Drittel verbindet.

Durch eine derartige Ausgestaltung der jeweiligen Toroidspule wird insbesondere der jeweilige Rückleiter möglichst nah an das Statorjoch herangezogen, wobei gleichzeitig der jeweilige Hinleiter optimal in der Nut liegt. Somit liegen der jeweiligen Nutabschnitt vollständig in der jeweiligen Nut, wobei gleichzeitig der jeweilige Rückenabschnitt auf der radialen Außenseite des Statorjoches aufliegt. Insgesamt wird somit eine in axialer Richtung betrachtet kompakte und Platz sparende Ausgestaltung der elektrischen Wicklung des Statorjoches erreicht.

Bei einer weiteren vorteilhaften Ausgestaltung der Erfindung sind in der jeweiligen Nut zumindest zwei Toroidspulen angeordnet.

Die zumindest zwei Toroidspulen können dabei in Umfangsrichtung nebeneinander und/oder oder in radialer Richtung aufeinander liegend angeordnet sein. Dank der vorgeschlagenen Toroidspulen kann insbesondere in axialer Richtung betrachtet ein vergleichsweise Platz sparender Wickelkopfbereich realisiert werden, so dass für die Ausgestaltung der elektrischen Wicklung des Statorjoches vergleichsweise wenig Bauraum erforderlich ist.

Bei einer weiteren vorteilhaften Ausgestaltung der Erfindung ist der Stator zweipolig ausgestaltet.

Dank der vorgeschlagenen Toroidspulen kann im Vergleich zu herkömmlichen Wicklungen eines Statorjoches bei einem zweipolig ausgestalteten Stator eine besonders große Platzersparnis in axialer Richtung betrachtet erreicht werden.

Im Folgenden wird die Erfindung anhand der in den Figuren dargestellten Ausführungsbeispiele näher beschrieben und erläutert. Es zeigen:
- FIG 1: ein erstes Ausführungsbeispiel des vorgeschlagenen Stators,
- FIG 2: einen Ausschnitt eines zweiten Ausführungsbeispiels des vorgeschlagenen Stators,
- FIG 3-6: eine Gruppe von dritten Ausführungsbeispielen des vorgeschlagenen Stators,
- FIG 7-8: eine Gruppe von vierten Ausführungsbeispielen des vorgeschlagenen Stators, und
- FIG 9-10: eine Gruppe von fünften Ausführungsbeispielen des vorgeschlagenen Stators.

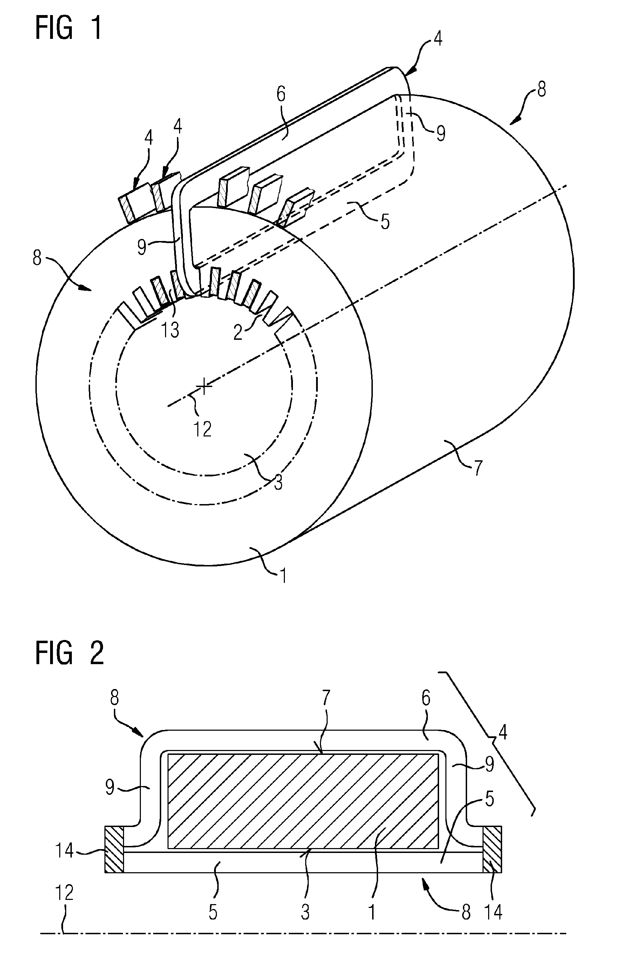

Figur 1 zeigt ein erstes Ausführungsbeispiel des vorgeschlagenen Stators. Der Stator weist ein hohlzylinderförmiges Statorjoch 1 mit einer Statorachse 12 und mehrere offene Nuten 2 auf, welche jeweils an der radialen Innenseite 3 des Statorjochs 1 angeordnet sind und welche jeweils in axialer Richtung verlaufen. Zwischen zwei benachbarten Nuten 2 verbleibt somit jeweils ein Statorzahn 13. Der Stator ist dabei ausgelegt für einen Betrieb mit einer elektrischen Leistung von zumindest 1 MW.

Weiterhin weist der Stator mehrere Toroidspulen 4 auf, welche jeweils das Statorjoch 1 umschließen. Einige der Toroidspulen 4 werden in der Figur 1 dabei lediglich angedeutet. Die jeweilige Toroidspule 4 weist jeweils einen Nutabschnitt 5 auf, welcher in der jeweiligen Nut 2 angeordnet ist. Ferner weist die jeweilige Toroidspule 4 jeweils einen Rückenabschnitt 6 auf, welcher an der radialen Außenseite 7 des Statorjoches 1 angeordnet ist. Außerdem weist die jeweilige Toroidspule 4 an jeder der beiden axialen Stirnseiten 8 einen Radialabschnitt 9 auf, welcher den jeweiligen Nutabschnitt 5 mit dem jeweiligen Rückenabschnitt 6 verbindet.

Die jeweilige Toroidspule 4 kann beispielsweise als Formspule ausgestaltet sein. Alternativ kann der jeweilige Nutabschnitt 5 und/oder der jeweilige Rückenabschnitt 6 als Stabwicklung ausgestaltet sein, welche jeweils wiederum als Roebelstab ausgestaltet sein kann.

Figur 2 zeigt einen Ausschnitt eines zweiten Ausführungsbeispiels des vorgeschlagenen Stators, wobei ein Schnitt entlang der Statorachse 12 dargestellt ist. Gleiche Bezugszeichen wie in Figur 1 bezeichnen dabei gleiche Gegenstände.

Der Nutabschnitt 5 der Toroidspule 4 ist als Stabwicklung ausgeführt. Außerdem sind der Rückenabschnitt 6 sowie die beiden Radialabschnitte 9 zusammen als Stabwicklung ausgeführt, wozu die Stabwicklung im Bereich des jeweiligen Radialabschnittes 9 S-förmig ausgestaltet ist. Die beiden Stäbe der Toroidspule 4 sind an den beiden axialen Stirnseiten 8 mittels eines jeweiligen Verbindungselementes 14 passend elektrisch miteinander verbunden.

Vorzugsweise ist die jeweilige Stabwicklung als Roebelstab ausgestaltet. Um Kosten zu sparen kann jedoch auch lediglich eine der jeweiligen Stabwicklungen als Roebelstab ausgestaltet sein, wohingegen die jeweils andere der jeweiligen Stabwicklungen ohne Teilleiterverdrillung ausgeführt sein kann.

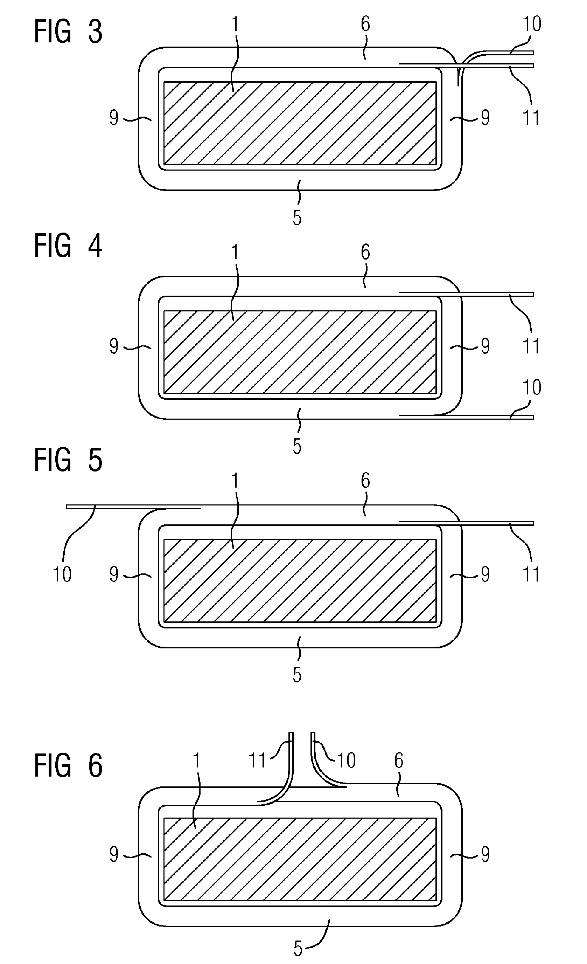

Die Figuren 3-6 zeigen eine Gruppe von dritten Ausführungsbeispielen des vorgeschlagenen Stators, wobei ähnlich wie bei Figur 2 ein Längsschnitt 12 dargestellt ist. Die Toroidspule 4 weist jeweils einen außen angeordneten Wicklungsanfang 10 und ein innen angeordnetes Wicklungsende 11 auf.

Bei der Ausgestaltung gemäß Figur 3 sind der Wicklungsanfang 10 an einem der Radialabschnitte 9 und das Wicklungsende 11 am Rückenabschnitt 6 angeordnet. Hingegen sind bei der Ausgestaltung gemäß Figur 4 der Wicklungsanfang 10 am Nutabschnitt 5 und das Wicklungsende 11 am Rückenabschnitt 6 angeordnet. Die Ausgestaltungen gemäß den Figuren 5 und 6 sehen vor, dass sowohl der Wicklungsanfang 10 als auch das Wicklungsende 11 am Rückenabschnitt 6 angeordnet sind. Bei der Ausgestaltung gemäß Figur 5 sind der Wicklungsanfang 10 und das Wicklungsende 11 dabei am jeweiligen axialen Ende angeordnet, wohingegen bei der Ausgestaltung gemäß Figur 6 der Wicklungsanfang 10 und das Wicklungsende 11 jeweils in der Gegend der axialen Mitte angeordnet sind.

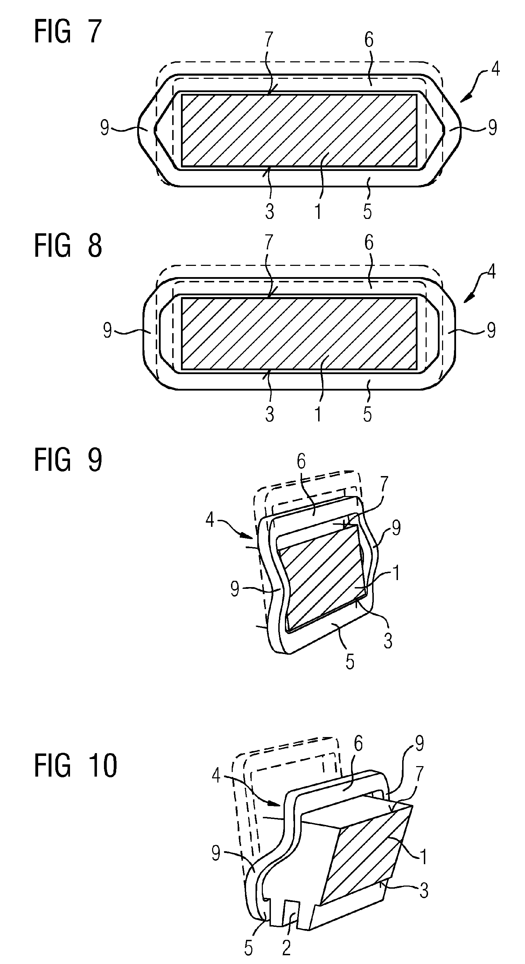

Die Figuren 7 und 8 zeigen eine Gruppe von vierten Ausführungsbeispielen des vorgeschlagenen Stators, wobei ähnlich wie bei Figur 2 ein Längsschnitt 12 dargestellt ist.

Mit der gestrichelten Linie ist dabei die Ausgestaltung der Toroidspule 4 angedeutet, bevor ihre beiden Radialabschnitte 9 V-förmig bzw. U-förmig ausgestaltet wurden. Vor dem Verformen bzw. Ziehen weist die Toroidspule 4 einen im Wesentlichen rechteckigen Querschnitt auf. Durch das Verformen bzw. Ziehen wird der jeweilige Radialabschnitt 9 dabei, wie in Figur 7 bzw. Figur 8 dargestellt, derart V-förmig bzw. U-förmig in axialer Richtung ausgestaltet, dass der Nutabschnitt 5 in radialer Richtung vollständig in der Nut 2 angeordnet ist und der Rückenabschnitt 6 auf der radialen Außenseite 7 des Statorjoches 1 aufliegt.

Die Figuren 9 und 10 zeigen eine Gruppe von fünften Ausführungsbeispielen des vorgeschlagenen Stators.

Mit der gestrichelten Linie ist dabei die Ausgestaltung der Toroidspule 4 angedeutet, bevor ihre beiden Radialabschnitte 9 V-förmig bzw. Z-förmig ausgestaltet wurden. Vor dem Verformen bzw. Ziehen weist die Toroidspule 4 einen im Wesentlichen rechteckigen Querschnitt auf. Durch das Verformen bzw. Ziehen wird der jeweilige Radialabschnitt 9 dabei, wie in Figur 9 bzw. Figur 10 dargestellt, derart V-förmig bzw. Z-förmig in Umfangsrichtung ausgestaltet, dass der Nutabschnitt 5 in radialer Richtung vollständig in der Nut 2 angeordnet ist und der Rückenabschnitt 6 auf der radialen Außenseite 7 des Statorjoches 1 aufliegt.

Zusammenfassend betrifft die Erfindung einen Stator für eine elektrische Maschine, wobei der Stator mit einer elektrischen Leistung von zumindest 1 MW betreibbar ist, wobei der Stator ein hohlzylinderförmiges Statorjoch und zumindest eine offene Nut aufweist, welche jeweils an der radialen Innenseite des Statorjoches angeordnet ist und welche jeweils in axialer Richtung verläuft. Weiterhin betrifft die Erfindung eine elektrische Maschine aufweisend einen derartigen Stator. Schließlich betrifft die Erfindung eine Mühle oder einen Kompressor aufweisend eine derartige elektrische Maschine. Um einen derartigen Stator bzw. eine derartige elektrische Maschine derart weiterzubilden, dass die zuvor beschriebenen Nachteile des Standes der Technik überwunden werden, wird zumindest eine Toroidspule vorgeschlagen, welche jeweils das Statorjoch umschließt, wobei die zumindest eine Toroidspule jeweils einen Nutabschnitt aufweist, welcher in der jeweiligen Nut angeordnet ist, wobei die zumindest eine Toroidspule jeweils einen Rückenabschnitt aufweist, welcher an der radialen Außenseite des Statorjoches angeordnet ist, und wobei die zumindest eine Toroidspule je axialer Stirnseite einen Radialabschnitt aufweist, welcher den jeweiligen Nutabschnitt mit dem jeweiligen Rückenabschnitt verbindet. Weiterhin werden eine elektrische Maschine aufweisend einen derartigen Stator sowie eine Mühle oder ein Kompressor aufweisend eine derartige elektrische Maschine vorgeschlagen.

## Patentansprüche

1. Stator für eine elektrische Maschine,
wobei der Stator mit einer elektrischen Leistung von zumindest 1 MW betreibbar ist,
wobei der Stator
- ein hohlzylinderförmiges Statorjoch (1) und
- zumindest eine offene Nut (2) aufweist, welche jeweils an der radialen Innenseite (3) des Statorjoches (1) angeordnet ist und welche jeweils in axialer Richtung verläuft, **gekennzeichnet durch**
zumindest eine Toroidspule (4), welche jeweils das Statorjoch (1) umschließt,
wobei die zumindest eine Toroidspule (4) jeweils einen Nutabschnitt (5) aufweist, welcher in der jeweiligen Nut (2) angeordnet ist,
wobei die zumindest eine Toroidspule (4) jeweils einen Rückenabschnitt (6) aufweist, welcher an der radialen Außenseite (7) des Statorjoches (1) angeordnet ist, und
wobei die zumindest eine Toroidspule (4) je axialer Stirnseite (8) einen Radialabschnitt (9) aufweist, welcher den jeweiligen Nutabschnitt (5) mit dem jeweiligen Rückenabschnitt (6) verbindet.

2. Stator nach Anspruch 1,
wobei die zumindest eine Toroidspule (4) jeweils als Formspule ausgestaltet ist.

3. Stator nach Anspruch 1,
wobei der jeweilige Nutabschnitt (5) und/oder der jeweilige Rückenabschnitt (6) als Stabwicklung ausgestaltet ist bzw. sind.

4. Stator nach Anspruch 3,
wobei der jeweilige Nutabschnitt (5) oder der jeweilige Rückenabschnitt (6) zusammen mit den beiden jeweiligen Radialabschnitten (9) als Stabwicklung ausgestaltet ist,
wobei die jeweilige Stabwicklung im Bereich des jeweiligen Radialabschnittes (9) S-förmig ausgestaltet ist.

5. Stator nach Anspruch 3 oder 4,
wobei die jeweilige Stabwicklung als Roebelstab ausgestaltet ist.

6. Stator nach einem der vorhergehenden Ansprüche,
wobei die zumindest eine Toroidspule (4) jeweils einen außen angeordneten Wicklungsanfang (10) und ein innen angeordnetes Wicklungsende (11) aufweist,
wobei der jeweilige Wicklungsanfang (10) am jeweiligen Nutabschnitt (5), am jeweiligen Rückenabschnitt (6) oder an einem der jeweiligen Radialabschnitte (9) angeordnet ist,
wobei das jeweilige Wicklungsende (11) am jeweiligen Nutabschnitt (5), am jeweiligen Rückenabschnitt (6) oder an einem der jeweiligen Radialabschnitte (9) angeordnet ist.

7. Stator nach einem der vorhergehenden Ansprüche,
wobei der jeweilige Radialabschnitt (9) derart V-förmig in axialer Richtung ausgestaltet ist, dass der jeweilige Nutabschnitt (5) in radialer Richtung vollständig in der jeweiligen Nut (2) angeordnet ist und der jeweilige Rückenabschnitt (6) auf der radialen Außenseite (7) des Statorjoches (1) aufliegt.

8. Stator nach einem der vorhergehenden Ansprüche,
wobei der jeweilige Radialabschnitt (9) derart V-förmig oder Z-förmig in Umfangsrichtung ausgestaltet ist, dass der jeweilige Nutabschnitt (5) in radialer Richtung vollständig in der jeweiligen Nut (2) angeordnet ist und der jeweilige Rückenabschnitt (6) auf der radialen Außenseite (7) des Statorjoches (1) aufliegt.

9. Stator nach einem der vorhergehenden Ansprüche,
wobei in der jeweiligen Nut (2) zumindest zwei Toroidspulen (4) angeordnet sind.

10. Stator nach einem der vorhergehenden Ansprüche,
wobei der Stator zweipolig ausgestaltet ist.

11. Elektrische Maschine aufweisend einen Stator nach einem der vorhergehenden Ansprüche.

12. Mühle oder Kompressor aufweisend eine elektrischen Maschine nach Anspruch 11.
